Europäisches Patentamt

European Patent Office

Office européen des brevets

(19)

(11) Publication number: **0 039 377**
**B1**

(12) **EUROPEAN PATENT SPECIFICATION**

(45) Date of publication of patent specification: **25.07.84**

(51) Int. Cl.³: **B 29 C 25/00, B 29 C 17/02**

(21) Application number: **80301489.3**

(22) Date of filing: **07.05.80**

(54) Thermoforming tubular articles.

(43) Date of publication of application:
**11.11.81 Bulletin 81/45**

(45) Publication of the grant of the patent:
**25.07.84 Bulletin 84/30**

(84) Designated Contracting States:
**BE DE FR GB IT NL SE**

(56) References cited:
**DE - A - 1 929 459**
**DE - A - 2 355 468**
**DE - A - 2 852 061**
**DE - B - 1 268 361**
**DE - C - 1 120 121**
**FR - A - 2 342 144**
**GB - A - 902 745**
**GB - A - 1 126 421**
**GB - A - 1 164 936**

(73) Proprietor: **Mitchell, Peter Robert**
**The Cottage London Road Kingsworthy**
**Winchester Hampshire SO23 7QN (GB)**

(72) Inventor: **Mitchell, Peter Robert**
**The Cottage London Road Kingsworthy**
**Winchester Hampshire SO23 7QN (GB)**

(74) Representative: **Rogers, John Edward**
**UNILEVER PLC Patents Division P.O. Box 68**
**Unilever House**
**London EC4P 4BQ (GB)**

Courier Press, Leamington Spa, England.

Description

The invention relates to thermoforming articles and is more particularly concerned with methods of manufacturing articles having a predetermined shape or form and manufactured from heat mouldable tubular material.

It is well known that thermoplastic tubular material can be bent with a bending die at suitable temperatures followed by cooling to set the material in the bent configuration. Such a process is described in German specification No. DE—A—2 355 468 wherein a pipe of plastics material is heated by radiant heat, bent to the required shape and cooled by passing cooling water therethrough. No heating is effected subsequent to the bending or forming step. Such a process suffers the disadvantage that the finished articles are lacking in thermal stability, i.e. when the service conditions result in the article being reheated to temperatures approaching the temperature at which they were initially bent there is a tendency for articles to resume the original shape or form of the tubular material.

In general there have been two principal ways of manufacturing thermally stable predetermined shaped articles from tubular material that can be thermoformed. The first of these methods comprises injection moulding in which the article is formed in an openable mould. For a hollow article the mould comprises a casing and a core, the mould being designed so that the core can be removed from the moulded articles. At some stage in such moulding, the mould is heated. In the other way of manufacture, the article is shaped from material while the material is in a plastic or pliable state and then the shaped article is baked or at least heated in an autoclave or oven. In French specification No. FR—A—2 342 144 articles having a predetermined shape or form are heated and cooled whilst in the predetermined form by sequential immersion in hot and cold water or by heating in an oven or by warm air and optionally cooling in ambient air.

Each of the above principal ways of manufacture have substantial disadvantages. Thus, the cost of injection moulding apparatus is sufficiently high to justify such expenditure only when very large numbers of articles are to be manufactured. Further it is really only economical and practical to mould relatively small articles. This is equally relevant to a manufacturer using an autoclave oven or immersion bath since the cost of a large volume autoclave or bath can only be justified either for large production volumes or for high value large articles.

Neither of the conventional manufactures is particularly suitable for low volume production of relatively large awkward shaped articles. The present invention addresses this difficulty.

According to the present invention there is provided a method of annealing tubular articles of heat mouldable material comprising forming and restraining the articles in the predetermined shape or form, heating the articles to the annealing temperature for a time to effect the annealing thereof and cooling the articles to set while restrained in the predetermined shape or form (FR—A—2 342 144), characterised in that the articles are preheated to a temperature below the annealing temperature before being formed and restrained in the predetermined shape or form, the preheating and the heating to annealing temperature and the cooling of the articles being effected by passing heating and cooling fluids therethrough as appropriate, the heating fluids being the same fluid as the cooling fluid.

On releasing the constraint on the finished article it remains in the predetermined shape or form and exhibits a high degree of thermal stability.

Because the heating fluid employed is the same substance as the fluid used for cooling the effects of any intermixing of the heating and cooling fluid is minimised.

The preheating step allows the tubular articles to be readily bent to the predetermined shape or form to be fitted to a jig structure defining the predetermined shape or form.

Preferably the fluid is oil which has a boiling point higher than the desired processing temperature.

Suitable heat mouldable or thermoformable materials are polyethylene, vinyl polymers such as polyvinyl chloride, polyvinyl acetate or polyamides.

The invention is particularly suitable for use with high pressure nylon hose heated to the annealing temperature by a heating fluid at a temperature of between 150°C and 170°C. In accordance with the invention the hose can be preheated prior to bending by passing fluid therethrough at a temperature of 100°C for a period of two minutes.

The tubular article can be shaped either by winding it onto a former to form a coil or by threading it onto or fixing it to a jig or like support structure.

Two examples of ways of performing the invention will now be described with reference to the accompanying drawings, in which:

Figure 1 is a diagrammatic drawing of apparatus for carrying out a first embodiment of the invention; and

Figure 2 is a diagrammatic drawing of an article manufactured in a second embodiment.

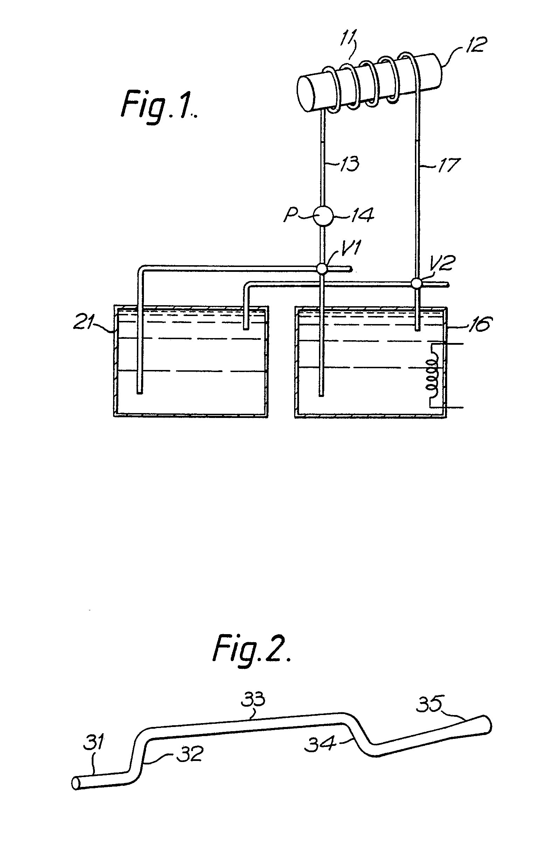

The manufacture to be described with reference to Figure 1 is usable to form a coil of tubular plastics material which coils are usable for coupling vacuum from a motor tractor to its trailer.

The initial tube is straight and flexible and is wound into a coil 11 on a rigid, in this example wooden, cylindrical former 12. The tube is formed on nylon hose, having an internal diameter of about 1 cm and a wall thickness of about 0.1 cms. The former is about 12 to 15 cms. in diameter and about 60—75 cms long. The former is detachably and rotatably mounted in a suitable frame (not shown). The tube is wound as a coil onto the former either while the former is detached from its mounting frame or by rotating the former in its frame and feeding the tube onto the rotating former. The former may be helically grooved to receive the tube. The rigidity of the wall of the tube is such that the bore remains substantially constant and the tube does not flatten.

When the coil has been wound on the former it is connected by a feed conduit 13 to a liquid pump 14 connected via a three-way valve V1 to a hot oil reservoir 16. The oil in the reservoir is Shell Clavus 25. An immersion heater is used in this example to heat the oil to a temperature of 150°C. Oil is returned to the reservoir 16 by a return conduit 17 including a second three-way valve V2. A second inlet of the supply valve V1 is connected to the outlet of a cold oil reservoir 21 and a second outlet of the return valve V2 is connected to the inlet of the reservoir 21. The cold oil is at room temperature but can be cooled to a lower temperature.

After winding the coil and connecting up the conduits, the pump is switched on and hot oil flowed through the coil. The flow is maintained for about four minutes with the reservoir oil temperature at about 150°C. The valves V1 and V2 are then adjusted to change the oil flow from hot oil to cold oil. The cold oil is allowed to flow for about four minutes. The oil is then vented from the coil by setting the valve 14 to its third setting in which air is pumped into the coil. Finally, and if required, the oil in the coil can be scavenged, for example by admitting a blast of nitrogen from a high pressure source into the coil.

After cooling, and scavenging if desired, the former is removed from its mounting frame and taken out from the coil. The coil retains its helical form. The helical coil can be extended and compressed in the manner of a concertina. Suitable fittings can be swaged or otherwise secured to the ends of the coil tube to permit it to be connected in a fluid or vacuum circuit. The coil is thermally stable.

In the second embodiment the article is of relatively large size. The article is usable, for example, in the air conditioning system of a vehicle and replaces a similar product which has hitherto often been assembled from discrete parts, at least some of which were metal. The article is formed from what is commercially identified as "high pressure nylon hose". Such hose is flexible in that it can be wound into relatively large diameter coils of, say for a 1.25 cm bore hose, 75—100 cms diameter. However, when cold or at room temperature, the hose cannot be taken around small radius curves e.g. curves of say 5 to 10 cms radius.

As illustrated in Figure 2, the article comprises five consecutive sections 31 to 35 and is between $1\frac{1}{2}$ and 2 meters in length. The sections are not all in the same plane and, in fact, in this example only sections 31, 32 are in the same plane. The article is formed using a jig structure which provides a grooved path into which the hose can be fitted. This is done by first laying out the hose alongside the jig path and then flowing oil at a temperature of 100°C through the hose for two minutes. By this time the hose has reached a temperature at which the nylon wall is sufficiently flexible to permit the tube to be fitted into and secured in the jig path. The oil temperature is then raised to between 150°C and 170°C and caused to flow for a further four minutes. The hose is connected in an oil flow circuit similar to that illustrated in Figure 1. Thereafter, the oil flow is changed from hot oil to cold (room temperature) oil to cool the hose to set and then vented and, if required, scavenged.

Many changes may be made to the two ways hereinbefore described of performing the invention. For example, a fluid other than oil, e.g. a gas or water, may be passed through the tubular material. The article can be moulded to have substantially any reasonable, required shape or form. The two described articles retain the full bore through their length since collapse of the tube is prevented by the internal liquid pressure. However, if it is required to introduce a constriction this can be done when the tube is heated after bending. Again, if an exterior fixing flat is required this can be moulded into the tube wall. In both the examples the ambient medium was atmospheric air. However there could be circumstances where a different medium, for example a liquid, is required.

## Claims

1. A method of annealing tubular articles of heat mouldable material comprising forming and restraining the articles in the predetermined shape or form, heating the articles (11) to the annealing temperature for a time to effect the annealing thereof and cooling the articles to set while restrained in the predetermined shape or form, characterised in that the articles (11) are preheated to a temperature below the annealing temperature before being formed and restrained in the predetermined shape or form, the preheating and the heating to annealing temperature and the cooling of the articles being effected by passing heating and cooling fluids (16, 21) therethrough as appropriate, the heating fluids (16) being the same fluid as the cooling fluid (21).

2. A method according to Claim 1, characterised in that the fluid (16, 21) is oil.

3. A method according to Claim 1, in which the tube is high pressure hose heated to the annealing temperature by fluid at a temperature of between 150°C and 170°C, characterised in that the preheating prior to bending is effected by fluid at 100°C for a period of two minutes.

## Patentansprüche

1. Verfahren zum Tempern rohrförmiger Gegenstände aus warm formbarem Material, wobei die Gegenstände in der vorherbestimmten Gestalt oder Form geformt und festgehalten werden, die Gegenstände (11) auf die Tempertemperatur für eine Zeite erhitzt werden, um ihre Temperung zu bewirken, und die Gegenstände zum Aushärten, während sie in der vorherbestimmten Gestalt oder Form festgehalten werden, gekühlt werden, dadurch gekennzeichnet, daß die Gegenstände (11) auf eine Temperatur unterhalb der Tempertemperatur vorerhitzt werden, bevor sie in der vorherbestimmten Gestalt oder Form geformt und festgehalten werden, wobei das Vorerhitzen und das Erhitzen auf die Tempertemperatur und das Abkühlen der Gegenstände durch entsprechendes Hindurchführend von Heiz- und Kühlfluiden (16, 21) durch sie bewerkstelligt wird, wobei die Heizfluide (16) dasselbe Fluid wie das Kühlfluid (21) sind.

2. Verfahren nach Anspruch 1, dadurch gekennzeichnet, daß das Fluid (16, 21) öl ist.

3. Verfahren nach Anspruch 1, bei dem das Rohr ein Hochdruckschlauch ist, der durch Fluid mit einer Temperatur zwischen 150°C und 170°C auf die Tempertemperatur erhitzt wird, dadurch gekennzeichnet, daß das Vorerhitzen vor dem Biegen durch Fluid bei 100°C für eine Dauer von zwei Minuten bewirkt wird.

## Revendications

1. Procédé de recuit d'objets tubulaires en matière moulable à chaud consistant à former et à retenir les objets dans le profil ou forme prédéterminée, à chauffer les objets (11) jusqu'à la température de recuit pendant un temps assurant leur recuit et à refroidir les objets jusqu'au durcissement tout en les maintenant dans le profil our forme prédéterminée, caractérisé en ce que les objets (11) sont préchauffés jusqu'à une température inférieure à la température de recuit avant d'être formés et maintenus dans le profil ou forme prédéterminée, le préchauffage et le chauffage jusqu'à la température de recuit et le refroidissement des objets étant effectués en faisant passer des fluides de chauffage et de refroidissement (16, 21) au travers d'eux suivant ce qui est approprié, le fluide de chauffage (16) étant le même fluide que le fluide de refroidissement (21).

2. Procédé selon la revendication 1, caractérisé en ce que le fluide (16, 21) est de l'huile.

3. Procédé selon la revendication 1, dans lequel le tube est un flexible haute pression chauffé jusqu'à la température de recuit par du fluide à une température comprise entre 150°C et 170°C, caractérisé en ce que le préchauffage avant cintrage est effectué par du fluide à 100°C pendant une période de deux minutes.

0 039 377

Fig.1.

Fig.2.

1